# NEUE EUROPÄISCHE PATENTSCHRIFT

(11) **EP 3 482 182 B2**
(45) Veröffentlichungstag und Bekanntmachung des Hinweises auf die Entscheidung über den Einspruch: **19.02.2025**
(45) Hinweis auf die Patenterteilung: 08.09.2021
(21) Anmeldenummer: 17735522.9
(22) Anmeldetag: 05.07.2017
(51) Int. Cl.: G01M 5/00, F03D 17/00, F03D 1/06

(54) **TORSIONSWINKELMESSUNG EINES ROTORBLATTS**
MEASURING A TORSION ANGLE OF A ROTOR BLADE
MESURE DE L'ANGLE DE TORSION D'UNE PALE DE ROTOR

(30) Priorität: 11.07.2016 DE 102016112633
(43) Veröffentlichungstag der Anmeldung: 15.05.2019
(73) Patentinhaber: Wobben Properties GmbH, 26607 Aurich (DE)
(72) Erfinder: DIETZ, Dennis, 28209 Bremen (DE); KUHNKE, Chris, 26603 Aurich (DE)
(74) Vertreter: Eisenführ Speiser
(86) Internationale Anmeldenummer: PCT/EP2017/066764
(87) Internationale Veröffentlichungsnummer: WO 2018/011034

(56) Entgegenhaltungen:
- WO-A1-03/029750
- DE-A1- 102007 007 047
- GB-A- 2 479 923
- GB-A- 2 487 072
- US-A1- 2011 150 648
- AWADI ET AL: "LA TORSION SIMPLE", 13 July 2014 (2014-07-13), XP055671154, Retrieved from the Internet <URL:https://www.technologuepro.com/resistance-des-materiaux/chapitre-5-la-torsion-simple.pdf> [retrieved on 20200224]

## Beschreibung

Die Erfindung betrifft ein Messsystem sowie ein Verfahren zum Bestimmen einer Torsion eines Rotorblatts. Die Erfindung betrifft weiterhin ein entsprechendes Rotorblatt und ein Verfahren zum Anordnen eines erfindungsgemäßen Messsystems in dem Rotorblatt und darüber hinaus eine entsprechende Windenergieanlage.

Im Betrieb einer Windenergieanlage rotieren die Rotorblätter um eine im Wesentlichen horizontale Rotorachse. Aufgrund aerodynamischer Effekte, die während der Rotation an den Rotorblättern auftreten, können sich die Rotorblätter verwinden bzw. tordieren. Dabei weist bspw. die Orientierung einer Profilsehne im Bereich der Blattspitze einen Winkel gegenüber der Orientierung einer Profilsehne im Bereich der Blattwurzel auf. Dieser Winkel wird hier als Torsionswinkel bezeichnet und er hängt von den Positionen der Profilsehnen entlang des Rotorblattes ab.

Wenigstens ein bekanntes Verfahren zum Bestimmen des Torsionswinkels basiert auf der Verwendung eines Kamerasystems. Dazu wird in einem Bereich vor der Windenergieanlage eine Kamera aufgebaut, die auf die Windenergieanlage gerichtet ist. Die Kamera erfasst die Stellung der Rotorblätter, bspw. über an den Rotorblättern angebrachten Markierungen, und kann daraus die Orientierung der Profilsehnen oder eine Verformung des Rotorblattes ableiten. Aus der Orientierung der Profilsehnen zueinander kann dann der Torsionswinkel des Rotorblattes bestimmt werden. Nachteilig bei diesem System ist, dass dieses nur zeitlich begrenzt einsetzbar ist, nämlich wenn der Rotor eine bestimmte Orientierung zu der Kamera aufweist. Des Weiteren ist ein solches System auch mit einem hohen Vorbereitungsaufwand verbunden oder der Windenergieanlagenbetreiber ist von externen Dienstleistern abhängig.

Andere bekannte Lösungen zum Bestimmen des Torsionswinkels sehen faseroptische Kabel in dem Rotorblatt vor. Das faseroptische Kabel wird dabei mit dem Material des Rotorblattes verklebt. Durch die Verformung bzw. Torsion des Rotorblattes und somit der Verformung bzw. Torsion des Kabels wird eine Polarisation des durch das faseroptische Kabel geleitete Licht bewirkt. Aus der Polarisation kann mittels einer Auswerteeinheit auf den Torsionswinkel geschlossen werden. Bei einem solchen System wurde jedoch eine große Abhängigkeit von dem Biegeverhalten des Rotorblattes festgestellt, wodurch bei Überlagerung von Biegung und Torsion des Rotorblattes fehlerhafte Torsionswinkel bestimmt werden. Darüber hinaus ist ein mit dem Rotorblatt verklebtes Kabel von der Temperaturausdehnung des Rotorblattes beeinflusst. Die Messung erfolgt somit nicht temperaturunabhängig.

Das Deutsche Patent- und Markenamt hat in der Prioritätsanmeldung zu vorliegender PCT-Anmeldung folgenden Stand der Technik recherchiert: DE 10 2014 117 914 A1 und US 2013/0093 879 A1.

Ein weiteres relevantes Dokument des Standes der Technik ist DE 10 2007 007047 A1.

Der vorliegenden Erfindung liegt somit die Aufgabe zugrunde, zumindest eines der oben genannten Probleme zu adressieren. Insbesondere soll eine Lösung vorgeschlagen werden, mit der kontinuierlich der Torsionswinkel erfasst werden kann und außerdem oder alternativ soll eine Lösung vorgeschlagen werden, die unabhängig von einer eventuellen Biegung des Rotorblattes den Torsionswinkel bestimmt. Zumindest soll zu bisherigen Systemen eine alternative Lösung vorgeschlagen werden.

Erfindungsgemäß werden ein Messsystem zum Bestimmen einer Torsion eines Rotorblattes gemäß Anspruch 1, ein Verhahren gemäß Anspruch 7 und ein Rotorblatt gemäß Anspruch 9 vorgeschlagen.

Ein solches Messsystem umfasst eine in dem Rotorblatt anzuordnende Referenzwelle und mehrere an der Referenzwelle angeordnete Drehsensoren. Die Referenzwelle ist so gelagert, dass das Rotorblatt frei um die Referenzwelle tordieren kann und so dass die Referenzwelle beim Tordieren des Rotorblattes selber nicht tordiert. Tordiert nun das Rotorblatt während-des Betriebs stellt sich zwischen dem tordierten Rotorblatt und der nicht tordierten Referenzwelle ein Differenzwinkel ein. Die an der Referenzwelle angeordneten Drehsensoren erfassen die Torsion bzw. die Verdrehung des Rotorblattes um die Referenzwelle im Bereich des Drehsensors und geben eine die Verdrehung des Rotorblattes relativ zur Referenzwelle beschreibenden Drehwinkel oder eine andere korrespondierende Größe aus.

An Stelle des Drehwinkels kann als korrespondierende Größe bspw. eine elektrische Spannung oder ein auf einen maximalen Drehwinkel normierter Wert ausgegeben werden, die bzw. der proportional zum Drehwinkel ist.

Es wird somit ein Messsystem vorgeschlagen, bei dem sich das Rotorblatt um eine starre Referenzwelle verdreht. Durch Vergleich mit der Referenzwelle kann dadurch an jeder

Stelle des Rotorblattes, an der ein Drehsensor angeordnet ist, die Verdrehung des Rotorblattes quantitativ erfasst werden.

Mit einem solchen Messsystem kann kontinuierlich der Torsionswinkel erfasst werden, da der Drehsensor kontinuierlich einen Torsionswinkel des Rotorblattes relativ zu der Referenzwelle erfasst. Ein solches Messsystem ist auch unabhängig von der Ausrichtung des Rotors zu einem externen System, da das Messsystem in dem Rotorblatt integriert ist.

Erfindungsgemäß ist vorgesehen, dass die Referenzwelle als Hohlwelle ausgebildet ist. Hohlwellen erlauben eine leichte Konstruktion und weisen dennoch eine hohe Steifigkeit insbesondere auch eine hohe Torsionssteifigkeit auf. Ist die Referenzwelle als Hohlwelle ausgebildet, erhöht sich durch das Messsystem das Gewicht des Rotorblattes nur unwesentlich. Das Messsystem beeinflusst somit die Eigenschaften des Rotorblattes kaum.

Eine weitere Ausführungsform des Messsystems sieht Lagerungsmittel vor, um die Referenzwelle entlang eines Vorderkantensteges des Rotorblattes anzuordnen. Der Vorderkantensteg eines Rotorblattes verläuft im Wesentlichen über die gesamte Länge des Rotorblattes im Bereich der Vorderkante des Rotorblattes. Der Vorderkantensteg stellt in diesem vorderen Bereich eine Verbindung zwischen einer Oberseite und einer Unterseite des Rotorblattes dar und versteift das Rotorblatt, damit das Rotorblatt den angreifenden Windlasten stand hält. Insbesondere tordiert ein Rotorblatt im Wesentlichen um den Vorderkantensteg. Der Vorderkantensteg eignet sich somit sehr gut, um den Torsionswinkel des Rotorblattes zu bestimmen, da hier der Abstand zur Torsionsachse, also der Achse, um die das Rotorblatt tordiert, minimal ist und keine bis geringe Abweichungen auftreten. Der Vorderkantensteg kann sich im Wesentlichen durch das gesamte Rotorblatt erstrecken und eignet sich somit sehr gut dazu, die Referenzwelle aufzunehmen und durch das gesamte Blatt zu führen.

In einer weiteren Ausführungsform des Messsystems ist eine drehfeste Wellenaufnahme vorgesehen, um ein Ende der Referenzwelle im Bereich einer Rotorblattwurzel oder im Bereich einer Rotorblattspitze drehfest zu befestigen. Durch eine drehfeste Befestigung eines äußeren Endes der Referenzwelle in der Rotorblattspitze wird eine Verdrehung im Bereich der Rotorblattspitze über die drehsteife Referenzwelle zu einem inneren Ende der Referenzwelle übertragen. Dieses innere Ende kann zum Beispiel an der Rotorblattwurzel angeordnet sein oder an einem Ende des Vorderkantenstegs, dass in der Nähe der Rotorblattwurzel angeordnet ist. Dadurch kann die Verdrehung der Rotorblattspitze am inneren Ende der Referenzwelle gemessen werden, also bspw. im Bereich der Rotorblattnabe.

Es wird außerdem eine gute Installierbarkeit des Messsystems geschaffen, indem die Referenzwelle bspw. in die drehfeste Wellenaufnahme im Bereich der Blattspitze eingeschoben werden kann, oder es kann die Referenzwelle zusammen mit der drehfesten Wellenaufnahme in die Rotorblattspitze eingeschoben werden. Das Problem einer von innen schlecht zugänglichen Blattspitze wird damit zumindest reduziert. Dadurch werden auch Drehsensoren im Bereich der schlecht zugänglichen Rotorblattspitze entbehrlich.

Die Rotorblattwurzel bildet somit einen Fixpunkt für die Referenzwelle und für die zu erfassende Verdrehung. Das Rotorblatt selbst verdreht sich ausgehend von der Blattwurzel, denn dort ist das Blatt an einer Rotornabe befestigt. Somit wird eine Verdrehung in Bezug auf die Blattwurzel erfasst. Die Referenzwelle bildet eine torsionsfreie Verlängerung der Blattwurzel. Die Erfassung einer Verdrehung relativ zur Referenzwelle ist somit eine Erfassung der Verdrehung relativ zur Blattwurzel.

Entlang der Referenzwelle wird diese jedoch durch Positionslager so gelagert, dass sie im Wesentlichen nur locker in ihrer Position gehalten wird, wobei lediglich Querkräfte von den Positionslagern weitergeleitet werden, Torsionskräfte aber nicht in die Referenzwelle eingeleitet werden. Somit kann das Rotorblatt an diesen Positionslagern frei um die Referenzwelle tordieren. Ein Verdrehen der Rotorblattspitze gegenüber der Rotorblattwurzel würde einen Drehwinkel zwischen dem verdrehten Rotorblatt in der Blattspitze und der nicht verdrehten Referenzwelle bewirken und einen Torsionswinkel an der Blattspitze anzeigen.

Alternativ kann vorgesehen sein, dass die Referenzwelle in einem Bereich der Rotorblattwurzel drehfest gelagert ist. Ein Verdrehen der Rotorblattspitze würde nun dazu führen, dass sie sich relativ zur Referenzwelle verdreht. Zum Erfassen der Verdrehung der Blattspitze müsste allerdings auch im Bereich der schlecht zugänglichen Blattspitze der Drehsensor angeordnet sein.

Genau an einem Ende oder einer anderen Stelle der Referenzwelle muss diese drehfest mit dem Rotorblatt verbunden sein. Das kann bspw. auch in der Mitte sein. Das Messsystem lässt sich somit für verschiedene Typen von Rotorblättern einsetzen, bei denen unterschiedliche Einbausituationen vorliegen.

Eine Weiterbildung des Messsystems sieht vor, dass die Referenzwelle elektrisch nicht leitend ist. Damit wird besonders ein Blitzschutz erreicht, der verhindert, dass ein Blitz in die Referenzwelle einschlägt, oder dass ein Blitzschlag in der Referenzwelle einen Strom induziert.

In einer Ausführungsform ist die Referenzwelle aus einem Faserverbundwerkstoff gefertigt. Vorgesehen ist dabei besonders ein mit Aramidfasern oder Kohlenstofffasern verstärkter Kunststoff. Solche Kunststoffe weisen eine hohe Festigkeit bei gleichzeitig geringem Gewicht auf und erlauben somit eine sehr leichte Referenzwelle. Darüber hinaus weisen solche Kunststoffe keinen oder nur einen geringen positiven oder negativen Wärmeausdehnungskoeffizienten auf, so dass die Referenzwelle über einen sehr großen Temperaturbereich wenig Wärmeausdehnung erfährt. Die Messung der Drehsensoren ist somit temperaturunabhängig. Besonders können dadurch auch mechanische Spannungen vermieden werden.

In einer weiteren Ausgestaltung des Messsystems ist die Referenzwelle axial verschiebbar gelagert. Das kann durch oben bereits genannte Positionslager erfolgen. Somit beeinflussen Ausdehnungen des Rotorblatts aufgrund von Temperaturänderungen oder aus anderen Gründen, nicht die Referenzwelle. Solche Ausdehnungen des Rotorblattes, die auch durch eine Verbiegung des Rotorblattes hervorgerufen sein können, führen nur zu einer relativen axialen Verschiebung zwischen Rotorblatt und Referenzwelle.

Ein Drehsensor kann besonders aus einem an der Referenzwelle befestigten Markerelement und einem daneben an dem Rotorblatt befestigten Aufnehmer ausgebildet sein. Eine Verdrehung des Rotorblattes im Bereich eines solchen Sensors führt dann zu einer Verdrehung des Markerelementes relativ zu dem Aufnehmer. Das Markerelement kann auch als Geber bezeichnet werden. Der Aufnehmer kann diese relative Verdrehung erfassen und den Referenzwinkel oder eine dazu korrespondierende Größe bestimmen und ausgeben. Das Markerelement kann bspw. als Ringscheibe mit einem Strichcode ausgebildet sein, oder einfach eine Referenzmarkierung aufweisen, die eine Verdrehung erkennen lässt. Je nach Beschaffenheit der Referenzwelle und der Genauigkeitsanforderung kann auch das Markerelement entbehrlich sein und der Aufnehmer unmittelbar eine relative Bewegung der Referenzwelle erfassen.

Mit einem solchen Drehsensor kann die Position der beiden Abschnitte zueinander, also der Torsionswinkel, sehr genau erfasst werden. Eine reine Biegung der Referenzwelle beeinflusst dabei nicht die Drehwinkelstellung der beiden Abschnitte zueinander. Auch ein leichtes Verschieben entlang der Torsionsachse bspw. durch Temperaturausdehnung beeinflusst die Drehwinkelstellung der beiden Abschnitte zueinander nicht. Nur eine Torsion des Rotorblattes verursacht ein Verdrehen der beiden Abschnitte zueinander, aus der der Torsionswinkel des Rotorblattes bestimmbar ist. Die Torsionswinkelbestimmung ist somit unabhängig von anderen Einflüssen.

Erfindungsggemäß sind mehrere Drehsensoren zum Erfassen einer Verdrehung des Rotorblattes an mehreren Positionen entlang der Referenzwelle angeordnet. Damit lässt sich der Torsionswinkel an mehreren Positionen entlang des Rotorradius bestimmen. Mehrere Drehsensoren entlang der Referenzwelle ermöglichen ein Erfassen von Bereichen des Rotorblattes, die sich stärker tordieren als andere Bereiche. Eine stärkere Torsion kann aufgrund einer geringeren Steifigkeit des Rotorblattes bspw. in der Blattspitze auftreten. Eine Überbelastung einzelner Bereiche des Rotorblattes kann auf diese Weise ggf. auch erkannt werden.

Eine weitere Ausführungsform des Messsystems ist dadurch gekennzeichnet, dass die Referenzwelle auf den mehreren Drehsensoren entlang der Blattlängsrichtung gelagert ist, so dass das Rotorblatt um die Referenzwelle rotieren kann. Die Drehsensoren bilden also gleichzeitig die Lagerung der Referenzwelle entlang der Rotorblattlängsrichtung. Das kann besonders einen Drehsensor betreffen, der ein Markerelement und einen Aufnehmer aufweist, wobei die Referenzwelle in dem Aufnehmer des Drehsensors gelagert ist. Somit können zusätzliche Lager und damit zusätzliches Gewicht und/oder zusätzliche Kosten vermieden werden. Die Drehsensoren sollen aber gleichzeitig eine freie Drehung des Rotorblattes um die Referenzwelle gestatten. In einer weiteren Ausgestaltung des Messsystems sind die Lagerungsmittel mit dem Vorderkantensteg verklebt oder verklemmt. Zum Verkleben kann jedes Lagerungsmittel besonders eine flache Klebfläche aufweisen, die mit einem Klebstoff versehen ist, oder versehen werden kann. Dadurch ist eine einfache und robuste Befestigung möglich. Ein Verklemmen der Lagerungsmittel ist insbesondere in solchen Bereichen des Rotorblattes vorgesehen, die zur Montage des Messsystems nicht oder schlecht zugänglich sind. Die Lagerungsmittel sind dazu bspw. auf den Steg aufschiebbar und an eine Geometrie des Vorderkantenstegs angepasst, auf den sie aufgeschoben werden. Mittels eines Hilfsmittels wird das Lagerungsmittel dann bis in den nicht zugänglichen Bereich eingebracht und an der vorgesehenen Position verklemmt. Auf diese Weise ist ein nachträglicher Einbau des Messsystems in Rotorblätter möglich, die bereits im Einsatz sind. An im Rotorblatt zugänglichen Stellen können die Lagerungsmittel zum Anordnen der Referenzwelle an dem Vorderkantensteg verklebt werden. Eine weitere vorteilhafte Ausgestaltung des Messsystems sieht vor, dass wenigstens einer der Drehsensoren als optischer Drehsensor ausgebildet ist. Besonders wird eine optische Abtastung des Markerelementes durch den Aufnehmer vorgeschlagen. Außerdem kommt auch in Betracht, dass einer der Drehsensoren äusschließlich optisch arbeitet und erfasste Werte oder Positionen eines Verdrehwinkels auch optisch, besonders über Lichtwellenleitungen, an eine Auswerteeinheit überträgt, die in der Blattwurzel oder der Rotornabe angeordnet sein kann. Durch die Verwendung solcher optischer Drehsensoren kann ebenfalls ein Schutz oder eine Unanfälligkeit gegen einen Blitzschlag erreicht werden.

Eine andere Ausgestaltung des Messsystems ist dadurch gekennzeichnet, dass die Referenzwelle aus mehreren Wellensegmenten gebildet wird. Eine solche Ausgestaltung ist zum Einbau oder nachträglichen Einbau des Messsystems in sehr lange Rotorblätter, die eine Länge von über 60 Metern aufweisen können, sehr vorteilhaft, da dadurch die Welle in mehreren Einzelteilen an den Einbauort transportiert werden kann und vor Ort auf die vorgesehene Länge zusammengebaut wird. Die Wellensegmente können bspw. an einander angepasste Enden aufweisen, um ineinander gesteckt zu werden. Dabei sind die angepassten Enden so ausgebildet, dass beim Ineinanderstecken eine drehsteife Steckverbindung entsteht.

Darüber hinaus schlägt die vorliegende Erfindung ein Verfahren zum Bestimmen einer Torsion eines Rotorblattes nach Anspruch 7 vor. Es arbeitet so, dass eine Torsion des Rotorblatts um eine in dem Rotorblatt in Blattlängsrichtung angeordnete Referenzwelle erfasst wird, die Referenzwelle so in dem Rotorblatt gelagert ist, dass das Rotorblattfrei um die Referenzwelle tordieren kann, so dass die Referenzwelle beim Tordieren des Rotorblattes nicht tordiert, eine Verdrehung durch an der Referenzwelle angeordnete Drehsensoren zum Erfassen einer Verdrehung des Rotorblattes um die Referenzwelle im Bereich des Drehsensors erfasst wird, und mittels des Drehsensors ein die Verdrehung des Rotorblattes relativ zur Referenzwelle beschreibender Drehwinkel oder eine andere korrespondierende Größe ausgegeben wird

Besonders bevorzugt verwendet das Verfahren ein Messsystem gemäß einer vorstehend beschriebenen Ausführungsform. Außerdem oder alternativ arbeitet das Verfahren so, wie vorstehen im Zusammenhang mit wenigstens einer Ausführungsformeines Messsystems beschrieben wurde.

Erfindungsgemäß wird der Drehwinkel oder die Verdrehung des Rotorblattes an mehrerer in Blattlängsrichtung verteilten Positionen erfasst. Somit kann der Torsionswinkel an mehreren Positionen des Rotorblattes bestimmt werden und daraus Aufschluss über das Torsionsverhalten in unterschiedlichen Bereichen des Rotorblattes gewonnen werden.

Eine weitere Ausführungsform des Verfahrens sieht vor, dass der Drehwinkel und/oder die Verdrehung des Rotorblattes zeitlich kontinuierlich erfasst wird. Bspw. werden dafür Daten der Drehsensoren von einem Prozessrechner aufgenommen und besonders weiter verarbeitet. Somit kann der Torsionswinkel ebenfalls zeitlich kontinuierlich bestimmt werden und für eine Regelung der Betriebsführung der Windenergieanlage verwendet werden. Der so erfasste Drehwinkel bzw. die so erfasste Verdrehung des Rotorblattes kann zur weiteren Verarbeitung einer Regelung der Windenergieanlage zugeführt werden.

Des Weiteren schlägt die vorliegende Erfindung ein Rotorblatt einer Windenergieanlage nach Anspruch 9 vor. Das Rotorblatt umfasst eine Rotorblattwurzel zum Befestigen des Rotorblattes an einer Rotornabe, eine an einer zur Rotorblattwurzel abgewandten Seite des Rotorblattes angeordnete Rotorblattspitze, eine in dem Rotorblatt in Blattlängsrichtung angeordnete Referenzwelle, wenigstens eine Lagerung der Referenzwelle, zum freien Lagern der Referenzwelle in dem Rotorblatt, so dass das Rotorblatt frei um die Referenzwelle tordieren kann, so mehrere dass die Referenzwelle beim Tordieren des Rotorblattes nicht tordiert, und mehrere an der Referenzwelle angeordnete Drehsensoren zum Erfassen einer Verdrehung des Rotorblattes um die Referenzwelle im Bereich des Drehsensors, wobei der Drehsensor einen die Verdrehung des Rotorblattes relativ zur Referenzwelle beschreibenden Drehwinkel oder eine andere korrespondierende Größe ausgibt.

Ein solches Rotorblatt umfasst besonders ein wie vorstehend gemäß wenigstens einer Ausführungsform beschriebenes Messsystem. Damit kann auf einfache Art und Weise, insbesondere wie vorstehend bereits beschrieben wurde, eine Torsion des Rotorblattes erfasst werden.

Ein solches Rotorblatt ermöglicht die genaue Bestimmung eines Torsionswinkels des Rotorblattes. Damit lassen sich Rückschlüsse auf die Leistung und den Betriebszustand der Windenergieanlage ableiten. Insbesondere können auch aerodynamische Annahmen und Simulationen der konstruktiven Auslegung des Rotorblattes validiert werden, insbesondere hinsichtlich des Einflusses des Torsionswinkels auf Betriebslasten, die Leistung oder den erzeugten Schall.

Vorzugsweise ist wenigstens ein von der Rotorblattwurzel in Richtung zur Rotorblattspitze verlaufender Vorderkantensteg vorgesehen, wobei an dem Vorderkantensteg die Referenzwelle und wenigstens ein Abschnitt eines Drehsensors angeordnet sind. Dadurch kann das Messsystem auf einfache Art und Weise in dem Rotorblatt ausgebildet werden, weil der Vorderkantensteg im Wesentlichen von der Blattwurzel zur Blattspitze verläuft und damit eine gute Befestigungsmöglichkeit bzw. Lagerungsmöglichkeit für das Messsystems im Rotorblatt bietet. Gemäß einer weiteren Ausführungsform wird vorgeschlagen, dass die Lagerung der Referenzwelle zwischen zwei Stegen, besonders zwischen zwei Stegen, die nicht den Vorderkantensteg umfassen, und dort an einem dieser Stege erfolgt. Dadurch kann das Messsystem während der Rotorblattfertigung in dem Rotorblatt montiert werden, wenn Formhälften des Rotorblatts noch offen vorliegen. Damit kann auch eine Lagerung der Referenzwelle an dem blattspitzenseitigen Ende vereinfacht werden.

Eine Ausführungsform des Rotorblattes sieht vor, dass das Rotorblatt in seiner Blattspitze eine Wellenaufnahme zum drehfesten Lagern der Referenzwelle aufweist. Eine solche Wellenaufnahme im Rotorblatt weist den Vorteil auf, das keine zusätzlichen Mittel notwendig sind, die Referenzwelle drehfest an dem Rotorblatt zu befestigen. Eine drehfeste Lagerung der Referenzwelle ist notwendig, da ein Drehwinkel des Rotorblattes gegenüber der Referenzwelle erfasst werden soll.

Eine weitere Ausführungsform des Rotorblattes ist dadurch gekennzeichnet, dass die Referenzwelle mit einem Passstück in einem Strukturelement des Rotorblattes, besonders in einer Innenkontur des Vorderkantenstegs drehsteif eingeklemmt ist. Dadurch kann eine drehsteife Befestigung auch in der schlecht zugänglichen Rotorblattspitze erreicht werden.

Dazu bietet sich besonders ein Vorderkantensteg an. Ein solcher Vorderkantensteg weist einen oberen und einen unteren Gurt auf, die einander gegenüber liegend angeordnet und über einen mittleren Stegabschnitt verbunden sind. Dadurch ergibt sich ein Bereich neben dem mittleren Stegabschnitt und den beiden Gurten, in den sich das Passstück einklemmen kann. Dabei ist besonders dort eine gute und haltbare Befestigung, wo sich zwischen den Gurten ein hinterschneidender Bereich ergibt, nämlich besonders dadurch, dass die beiden Gurte nicht genau planparallel verlaufen. Auf diese Weise können auch Lagerungsmittel an dem Vorderkantensteg befestigt werden. Bei den Lagerungsmitteln ist besonders zu beachten, dass diese mit der Referenzwelle nicht viel Gewicht halten müssen.

Besonders können in unzugänglichen Bereichen des Rotorblattes die Lagerungsmittel in einfacher Weise an die vorgesehene Position geschoben und dort eingeklemmt werden, so dass keine zusätzlichen Mittel notwendig sind die Lagerungsmittel und dadurch die Referenzwelle an dem Vorderkantensteg oder einem anderem Strukturteil des Rotorblattes anzuordnen.

Eine bevorzugte alternative Ausführungsform des Rotorblatts ist dadurch gekennzeichnet, dass das Rotorblatt in seiner Blattwurzel eine Wellenaufnahme zum drehfesten Lagern der Referenzwelle aufweist. In der Blattwurzel kann die Referenzwelle besonders sicher drehfest gelagert werden und eine solche Lagerung kann auch recht gut überprüft werden. Bei dieser Ausführungsform bleibt die Referenzwelle in Ruhe und das Rotorblatt tordiert um die Referenzwelle. Dadurch wird die Referenzwelle, anders als bei einer Fixierung in der Blattspitze, nicht bei Torsion des Rotorblattes um die eigene Achse gedreht.

Es wird auch eine Windenergieanlage mit einem erfindungsgemäßen Rotorblatt vorgeschlagen.

Schließlich schlägt die vorliegende Erfindung auch ein Verfahren zum Montieren eines Messsystems nach einer der vorstehend beschriebenen Ausführungsformen bzw. Ausgestaltungen in einem Rotorblatt einer Windenergieanlage vor.

Das Verfahren umfasst die Schritte drehsteifes Befestigen eines Passstücks auf einem Blattspitzenabschnitt der Referenzwelle, Einschieben der Referenzwelle mit dem Passstück voran in einen Einbauraum in der Blattspitze des Rotorblattes, entlang eines Strukturelementes, besonders eines Vorderkantenstegs, Aufschieben der Lagerungsmittel auf die Referenzwelle und Befestigen der Lagerungsmittel entlang des Strukturelementes bzw. des Vorderkantenstegs, Anordnen mehrerer Drehsensoren im Bereich der Referenzwelle in dem Rotorblatt. Hier wird besonders die Eigenschaft der drehsteifen Referenzwelle für das Montieren ausgenutzt, indem diese Referenzwelle aus einem begehbaren Bereich des Rotorblattes in den nicht begehbaren und damit schwer zugänglichen Raum in der Nähe der Blattspitze geschoben wird. Gleichzeitig wird die vorhandene Struktur des Rotorblattes dort zum Befestigen ausgenutzt.

Vorzugsweise werden einige der Lagerungsmittel in einem nicht begehbaren Bereich in der Nähe der Blattspitze durch Festklemmen an dem Strukturelement bzw. in dem Vorderkantensteg befestigt und einige andere der Lagerungsmittel in einem begehbaren Bereich an dem Strukturelement bzw. dem Vorderkantensteg verklebt. Auch dadurch kann die vorhandene Situation im Rotorblatt ausgenutzt werden. Besonders im nicht begehbaren Bereich weist der Vorderkantensteg einen sich zur Blattspitze hin verengenden und oftmals hinterschneidenden Bereich auf, der dazu genutzt werden kann, einige Lagerungsmittel dort so einzuschieben, dass sie dort eingeklemmt werden. Dazu braucht lediglich das jeweilige Lagerungsmittel an die bekannte Größe und Form des Bereichs, in dem das Lagerungsmittel fixiert werden soll, angepasst zu werden. Im begehbaren Bereich, in dem auch der Vorderkantensteg größer ist, kann eine Befestigung durch Verkleben vorgenommen werden. Dort ist auch ausreichend Platz, die Verklebung fachmännisch auszuführen.

Das Verfahren ermöglicht auch ein Nachrüsten von bereits existierenden Windenergieanlagen mit einem erfindungsgemäßen Messsystem. Darüber hinaus lässt sich damit ein solches Messsystem auch Reparieren bzw. nach einer Reparatur wieder montieren.

Erfindungsgemäß wird auch vorgeschlagen ein Verfahren nach Anspruch 14 zum Warten oder Reparieren eines in einem Rotorblatt angeordneten Messsystems zum Bestimmen einer Torsion des Rotorblattes, und das Messsystem umfasst
- eine in dem Rotorblatt in Blattlängsrichtung angeordnete Referenzwelle (12),
- wenigstens eine Lagerung der Referenzwelle (12), zum freien Lagern der Referenzwelle (12) in dem Rotorblatt, so dass das Rotorblatt frei um die Referenzwelle (12) tordieren kann, so dass die Referenzwelle (12) beim Tordieren des Rotorblattes nicht tordiert, und
- mehrere an der Referenzwelle angeordnete Drehsensoren (20) zum Erfassen einer Verdrehung des Rotorblattes um die Referenzwelle (12) im Bereich des Drehsensors (20), wobei der Drehsensor (20) einen die Verdrehung des Rotorblattes relativ zur Referenzwelle (12) beschreibenden Drehwinkel oder eine andere korrespondierende Größe ausgibt, umfassend die Schritte:
   - Entnehmen der Referenzwelle oder eines Teils davon aus wenigstens einer der Lagerungen,
   - Ausbauen dieser wenigstens einen Lagerung und/oder des wenigstens einen Drehsensors,
   - Überprüfen der ausgebauten Lagerung bzw. des ausgebauten Drehsensors und
   - Wiedereinsetzen der Lagerung bzw. des Drehsensors, oder eines entsprechenden Ersatzteils,
   - Wiedereinsetzen der Referenzwelle bzw. des entnommenen Teils davon.

Hierdurch kann auf einfache Art und Weise eine Wartung oder Reparatur des Messsystems durchgeführt werden. Durch die sukzessiven Schritte können die Elemente einzeln entnommen und inspiziert und ggf. repariert oder ersetzt werden.

Die Erfindung wird nachfolgend anhand von Ausführungsformen unter Bezugnahme auf die begleitenden Figuren beispielhaft beschrieben.
- Fig. 1: zeigt perspektivisch eine Windenergieanlage in schematischer Darstellung.
- Fig. 2: zeigt eine schematische Darstellung einer Ausführungsform eines erfindungsgemäßen Messsystems.
- Fig. 3: zeigt schematisch ein beispielhaftes Lagerungsmittel.
- Fig. 4: zeigt schematisch ein in einem Rotorblatt angeordnetes Lagerungsmittel.
- Fig. 5: zeigt einen Vorderkantensteg in einer perspektivischen Darstellung.
- Fig. 6: zeigt einen vergrößerten Ausschnitt eines Vorderkantenstegs der Fig. 5.
- Fig. 7: zeigt eine weitere Ausführungsform eines Lagermittels.

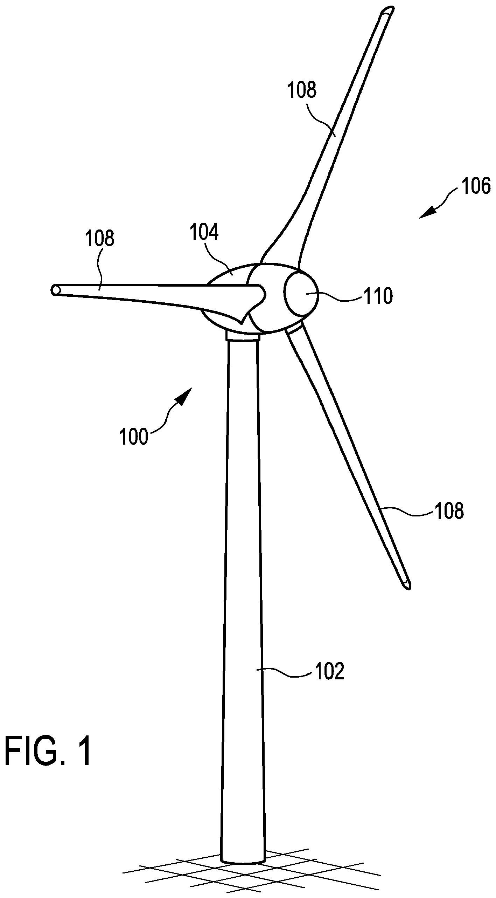

Fig. 1 zeigt eine erfindungsgemäße Windenergieanlage 100 mit einem Turm 102 und einer Gondel 104. An der Gondel 104 ist ein Rotor 106 mit drei erfindungsgemäßen Rotorblättern 108 und einem Spinner 110 angeordnet. Der Rotor 106 wird im Betrieb durch den Wind in eine Drehbewegung versetzt und treibt dadurch einen Generator in der Gondel 104 an. Während der Rotation können die Rotorblätter 108 tordieren. Zum Erkennen und Bestimmen der Torsion der Rotorblätter 108 ist in den Rotorblättern 108 ein Messsystem montiert.

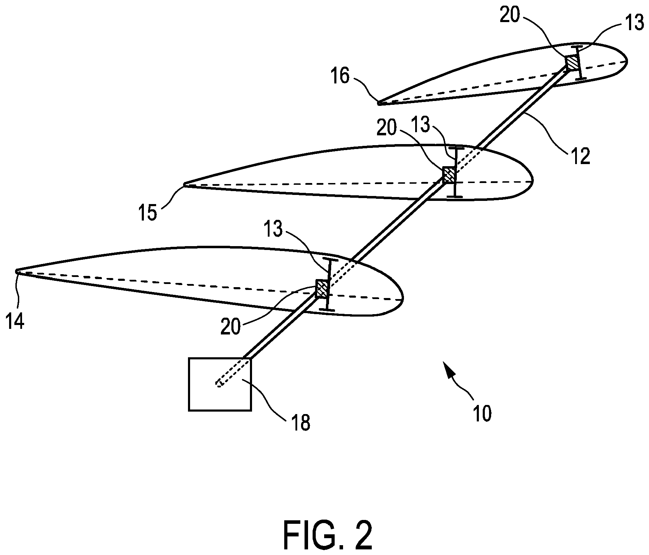

In Fig. 2 sind schematisch die Komponenten des Messsystems 10 dargestellt. Das Messsystem 10 umfasst eine Referenzwelle 12. Die Referenzwelle 12 ist in einem Rotorblatt an einem Vorderkantensteg 13 angeordnet. Die Referenzwelle 12 ist vorzugsweise als Hohlwelle ausgebildet, so dass ein geringes Gewicht bei gleichzeitig hoher Steifigkeit der Referenzwelle 12 erzielt wird. Die Referenzwelle 12 weist einen Außendurchmesser von ungefähr 25 Millimeter und einen Innendurchmesser von ungefähr 21 Millimeter auf.

Von dem Rotorblatt sind zur besseren Übersicht nur drei schematische Profilschnitte 14, 15, 16 dargestellt, wobei der Profilschnitt 14 einen Profilschnitt im Bereich einer Rotorblattwurzel, der Profilschnitt 15 einen Profilschnitt in einem Bereich der Rotorblattmitte und der Profilschnitt 16 einen Profilschnitt in einem Bereich der Rotorblattspitze schematisch darstellt. Der besseren Übersichtlichkeit halber ist besonders das Profil 16, das eines in der Nähe der Blattspitze darstellen soll, vergrößert dargestellt. Mit gestrichelter Linie ist in den Profilschnitten 14, 15, 16 jeweils noch eine Profilsehne angedeutet, um eine Verdrehung des Profilschnitts 16 gegenüber dem Profilschnitt 15 und dem Profilschnitt 14 darzustellen. Auch der Profilschnitt 15 ist gegenüber dem Profilschnitt 14 verdreht. Das Rotorblatt ist somit tordiert.

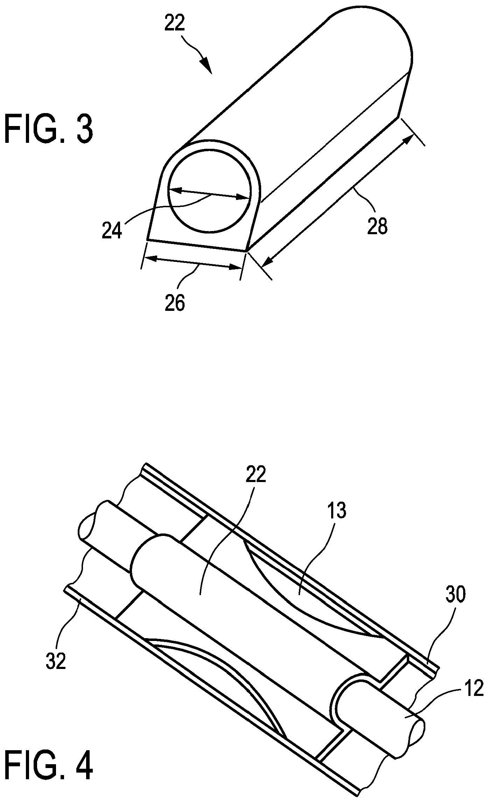

An einem Ende ist die Referenzwelle 12 in einer Wellenaufnahme 18 drehfest eingespannt. Die Wellenaufnahme 18 verhindert eine Drehbewegung der Referenzwelle 12 um ihre Längsachse. In dem gezeigten Ausführungsbeispiel ist die Referenzwelle 12 im Bereich der Rotorblattwurzel drehfest eingespannt. Weitere Lager sind entlang der Referenzwelle 12 vorgesehen, die die Referenzwelle 12 an dem Vorderkantensteg 13 befestigen. Die weiteren Lager werden durch Lagerungsmittel 22 (s. Fig. 3) gebildet, die die Referenzwelle 12 führen, aber nicht drehsteif festhalten. Somit ist das Rotorblatt um die Referenzwelle 12 verdrehbar, ohne dass die Referenzwelle 12 bei einem Verdrehen des Rotorblattes tordiert.

Entlang der Referenzwelle 12 sind mehrere Drehsensoren 20 angeordnet. Die Drehsensoren 20 sind lediglich schematisch dargestellt. Die Drehsensoren 20 können mit einem Markerelement an der Referenzwelle 12 und mit einem Aufnehmer an dem Vorderkantensteg 13 befestigt sein.

Fig. 2 verdeutlicht auch, dass die Profilschnitte 14, 15, 16 unterschiedlich stark verdreht sind. Mit mehreren entlang der Referenzwelle 12 angeordneten Drehsensoren 20 können somit auch Bereiche des Rotorblattes mit unterschiedlich ausgeprägtem Torsionswinkel bestimmt werden.

Fig. 3 zeigt eine schematische Ansicht eines Lagerungsmittels 22. Ein solches Lagerungsmittel 22 dient dem Anordnen, Führen und Lagern der Referenzwelle 22 an dem Vorderkantensteg 13 oder einem anderen Strukturelement des Rotorblattes. Die Lagerungsmittel 22 sind im Wesentlichen als Rohr ausgebildet. Ein Innendurchmesser 24 eines bevorzugten Lagerungsmittels 22 beträgt ungefähr 30 Millimeter und ist damit um ungefähr 5 Millimeter größer als der Außendurchmesser der bevorzugten Referenzwelle 12. Dadurch ist ein freies Rotieren des Rotorblattes um die Referenzwelle 12 mit wenig bis gar keiner Reibung möglich. Ein Außendurchmesser 26 eines bevorzugten Lagerungsmittels 22 beträgt ungefähr 35 Millimeter. Eine Länge 28 eines des bevorzugten Lagerungsmittels 22 beträgt ungefähr 250 Millimeter.

Fig. 4 zeigt ein Lagerungsmittel 22, das an einem Vorderkantensteg 13 angeordnet ist. Der Vorderkantensteg 13 weist einen oberen Gurt 30 und einen unteren Gurt 32 auf. Zwischen dem oberen Gurt 30 und dem unteren Gurt 32 ist das Lagerungsmittel 22 eingeklemmt, um die Referenzwelle 12 an dem Vorderkantensteg 13 anzuordnen. Zum Verhindern einer großen Durchbiegung der Referenzwelle 12 sind Lagerungsmittel 22 ungefähr in einem Abstand von 2000 bis 2500 Millimeter entlang des Vorderkantenstegs 13 zum Lagern der Referenzwelle 12 vorgesehen.

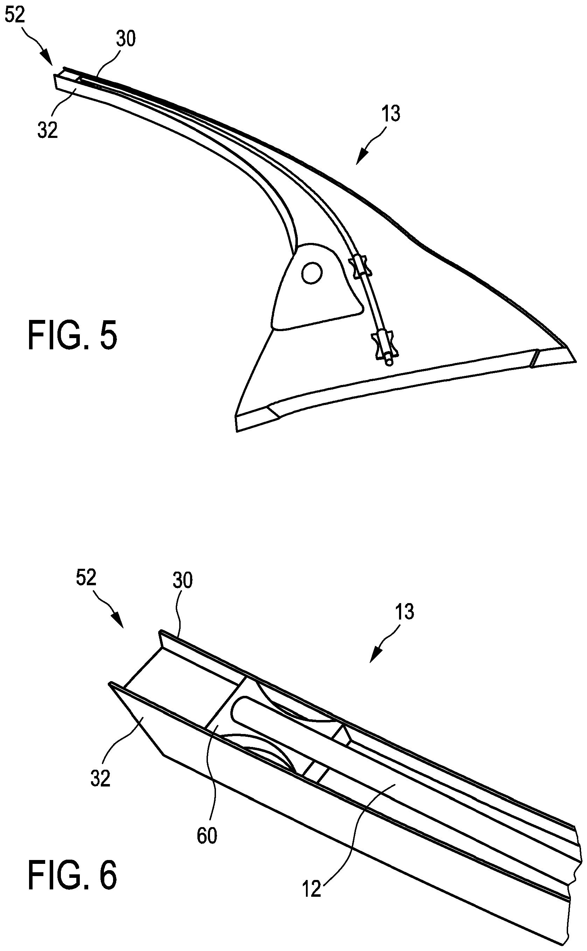

Fig. 5 zeigt einen Vorderkantensteg 13 in einer perspektivischen Darstellung von einem Blattwurzelbereich 51 zu einem Blattspitzenbereich 52. Ein oberer Gurt 30 und ein unterer Gurt 32 bilden sich besonders erst zum Blattspitzenbereich 52 aus.

Fig. 6 zeigt einen vergrößerten Ausschnitt des Blattspitzenbereichs 52 des Vorderkantenstegs 13 der Fig. 5. Dort ist zu erkennen, dass zwischen dem oberen und unteren Gurt 30, 32 ein Passstück 60 eingeklemmt ist und die Referenzwelle 12 drehsteif aufnimmt. Insoweit stellt das zu Fig. 2 ein abweichende Ausführungsform dar. Das Passstück 60 bildet somit eine Wellenaufnahme für die Referenzwelle 12. Das Passstück 60 ist in seinem Aufbau ganz ähnlich dem Lagerungsmittel 22 der Fig. 4, wobei die Referenzwelle 12 durch das Passstück 60 nicht hindurch reicht und drehsteif aufgenommen ist.

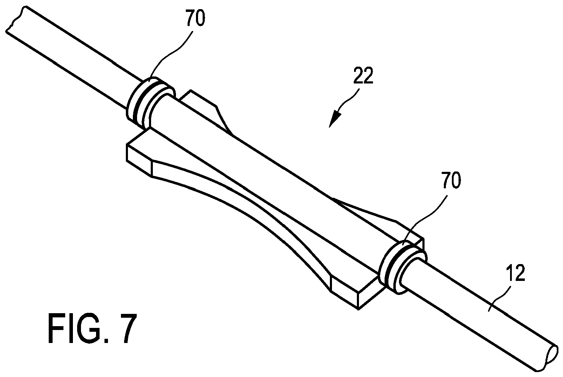

Fig. 7 zeigt eine weitere Ausführungsform eines Lagerungsmittels 22. Dabei sind zusätzlich Klemmteile 70 auf der Referenzwelle 12 angeordnet, die Zug- und Schubkräfte der Referenzwell 12, die als Hohlwelle ausgebildet ist, aufnehmen können. Die Klemmteile 70 sollen ein Herausrutschen der Referenzwelle 12 verhindern. Die Klemmteile sollten möglichst so installiert werden, dass ein Kontakt der Klemmteile 70 mit der Lagerung vermieden wird. Um in dem Fall, dass doch eine Berührung auftritt, die Reibung möglichst klein zu halten, wird vorgeschlagen, eine Kugellagerung zwischen Klemmteil 70 und Lagerungsmittel 22 vorzusehen, um dadurch eine Torsion der Referenzwelle zu vermeiden.

Im Übrigen können zur Vereinfachung für die gezeigten Ausführungsformen gleiche Bezugszeichen für ähnliche aber nicht unbedingt identische Elemente verwendet werden.

Zur Montage des Messsystems 10 wird die Referenzwelle 12 auf dem Vorderkantensteg 13 in Richtung Blattspitze eingeschoben. Hierzu ist die Referenzwelle 12 vorzugsweise aus mehreren Segmenten gebildet, die einzeln nacheinander miteinander verbunden werden. An dem Ende der Referenzwelle 12, das im Bereich der Blattspitze angeordnet wird, ist das Passstück 60 fest montiert. Das Befestigungselement 22 wird so weit entlang des Vorderkantenstegs eingeschoben, bis es zwischen dem oberen Gurt 30 und dem unteren Gurt 32 eingeklemmt ist. Das Befestigungselement 22 wird also formschlüssig und kraftschlüssig an dem Vorderkantensteg 13 befestigt. Bei dieser Ausführungsform ist die Referenzwelle 12 also im Bereich der Blattspitze drehfest montiert.

Alternativ ist jedoch vorgesehen, dass bei einer drehfesten Lagerung der Referenzwelle 12 in der Blattwurzel, das Passstück 60 lediglich eine abschließende Lagerung der Referenzwelle 12 in der Blattspitze realisiert, eine relative Drehung der Referenzwelle aber zulässt. Dabei ist das Passstück 60 so ausgebildet, dass sich das Passstück 60 bei einer Torsion des Rotorblatts um die Referenzwelle 12 dreht.

Nachdem die Referenzwelle 12 montiert ist, werden nach und nach die weiteren Lagerungsmittel 22 zum Lagern der Referenzwelle 12 aufgeschoben und mit Hilfe eines Hilfsrohres bis an die vorgegebene Sollposition verbracht und festgestoßen. Ein Klemmen der Lagerungsmittel 22 erfolgt in Bereichen des Rotorblattes, die nicht zugänglich sind. In zugänglichen Bereichen werden die Lagerungsmittel 22 verklebt. Auf dem letzten Segment der Referenzwelle 12 kann ein wie in Fig. 7 gezeigtes Lagerungselement 22 zur Aufnahme der Zugkräfte und Schubkräfte der Referenzwelle 12 angebracht bzw. verklebt sein.

An vorgegebenen Positionen wird jeweils ein entsprechender Drehsensor 20 angebracht.

Durch die feste Einspannung der Referenzwelle 12 an einem Ende des Vorderkantenstegs 13 werden die Torsionswinkel, welche sich im Betrieb der Windenergieanlage entlang des Rotorblattradius einstellen, direkt an die Drehsensoren 20 entlang des Vorderkantenstegs übertragen. Ein solches Messsystem ist unanfällig für eine Überlagerung von Torsion und Biegung des Rotorblattes, da ausschließlich eine Verdrehung von den Drehsensoren 20 erfasst wird. Da die Lagerungsmittel 22 die Referenzwelle nicht fest einspannen, ist das Messsystem auch unanfällig für unterschiedliche Wärmeausdehnungen des Rotorblattes und der Referenzwelle 12. Da das System in dem Rotorblatt dauerhaft integriert ist, kann zu jedem Zeitpunkt im Betrieb der Windenergieanlage der Torsionswinkel bestimmt werden. Somit können Betriebszustände der Anlage überwacht und Simulationsmodelle, die zur Auslegung des Rotorblattes und/oder der Windenergieanlage herangezogen wurden, nachgeprüft und dadurch verbessert werden. Der Torsionswinkel kann dadurch auch zur Regelung der Betriebsführung der Windenergieanlage verwendet werden.

Vorteilhaft ist auch, dass aus der Kenntnis des Torsionswinkels ein Betriebszustand der Windenergieanlage ableitbar ist, was gemäß einer erfindungsgemäßen Ausführung vorgeschlagen wird. Darüber hinaus kann mit Hilfe des Torsionswinkels eine Regelung der Windenergieanlage hinsichtlich Betriebslasten optimiert werden. Der Torsionswinkel kann auch als Referenz der von der Windenergieanlage erbrachten Leistung und des von den Rotorblättern abgegebenen Schalls dienen.

### Patentansprüche

**1.** Messsystem (10) zum Bestimmen einer Torsion eines Rotorblattes, umfassend
   - eine in dem Rotorblatt in Blattlängsrichtung anzuordnende Referenzwelle (12),
   - wenigstens eine Lagerung der Referenzwelle (12), zum freien Lagern der Referenzwelle (12) in dem Rotorblatt, so dass das Rotorblattfrei um die Referenzwelle (12) tordieren kann, so dass die Referenzwelle (12) beim Tordieren des Rotorblattes nicht tordiert,
   - wenigstens einen an der Referenzwelle angeordneten Drehsensor (20) zum Erfassen einer Verdrehung des Rotorblattes um die Referenzwelle (12) im Bereich des Drehsensors (20), wobei der Drehsensor (20) einen die Verdrehung des Rotorblattes relativ zur Referenzwelle (12) beschreibenden Drehwinkel oder eine andere korrespondierende Größe ausgibt, **dadurch gekennzeichnet, dass**
   - die Referenzwelle (12) als Hohlwelle ausgebildet ist.
**2.** Messsystem (10) nach Anspruch 1,

## Patentansprüche

1. Messsystem (10) zum Bestimmen einer Torsion eines Rotorblattes, umfassend
- eine in dem Rotorblatt in Blattlängsrichtung anzuordnende Referenzwelle (12),
- wenigstens eine Lagerung der Referenzwelle (12), zum freien Lagern der Referenzwelle (12) in dem Rotorblatt, so dass das Rotorblatt frei um die Referenzwelle (12) tordieren kann, so dass die Referenzwelle (12) beim Tordieren des Rotorblattes nicht tordiert,
- wenigstens einen an der Referenzwelle angeordneten Drehsensor (20) zum Erfassen einer Verdrehung des Rotorblattes um die Referenzwelle (12) im Bereich des Drehsensors (20), wobei der Drehsensor (20) einen die Verdrehung des Rotorblattes relativ zur Referenzwelle (12) beschreibenden Drehwinkel oder eine andere korrespondierende Größe ausgibt, **dadurch gekennzeichnet, dass**
- die Referenzwelle (12) als Hohlwelle ausgebildet ist, und
- mehrere Drehsensoren zum Erfassen einer Verdrehung des Rotorblattes an mehreren Positionen entlang der Referenzwelle angeordnet sind.

2. Messsystem (10) nach Anspruch 1, **dadurch gekennzeichnet, dass**
Lagerungsmittel (22) vorgesehen sind, um die Referenzwelle (12) entlang eines Vorderkantensteges (13) des Rotorblattes anzuordnen und/oder die Lagerungsmittel (22) dazu vorbereitet sind, an dem Vorderkantensteg (13) verklebt oder verklemmt zu werden.

3. Messsystem (10) nach Anspruch 1 oder 2, **dadurch gekennzeichnet, dass**
eine drehfeste Wellenaufnahme (18) vorgesehen ist, um ein Ende der Referenzwelle (12) im Bereich einer Rotorblattspitze drehfest zu befestigen und/oder die Referenzwelle (12) axial verschiebbar angeordnet ist.

4. Messsystem (10) nach einem der vorstehenden Ansprüche, **dadurch gekennzeichnet, dass**
die Referenzwelle (12) elektrisch nichtleitend und/oder aus einem Faserverbundwerkstoff gefertigt ist, insbesondere aus mit Aramidfasern oder Kohlenstofffasern verstärktem Kunststoff, wobei die Referenzwelle (12) insbesondere aus mehreren Wellensegmenten zusammengesetzt ist.

5. Messsystem (10) nach einem der vorstehenden Ansprüche, **dadurch gekennzeichnet, dass**
der Drehsensor (20) als optischer Drehsensor ausgebildet ist und/oder ein Markerelement aufweist, das zum Befestigen an der Referenzwelle vorbereitet ist, und
einen Aufnehmer, der zum Befestigen an dem Vorderkantensteg (13) des Rotorblattes oder einem anderen Strukturelement des Rotorblattes vorbereitet ist, und wobei der Aufnehmer dazu vorbereitet ist, eine Verdrehung des Markerelementes relativ zu dem Aufnehmer zu erfassen, um dadurch eine Verdrehung des Rotorblatts relativ zur Referenzwelle an dieser Stelle zu erfassen.

6. Messsystem (10) nach einem der vorstehenden Ansprüche, **dadurch gekennzeichnet, dass**
die Referenzwelle (12) auf den mehreren Drehsensoren (20) entlang der Blattlängsrichtung gelagert ist.

7. Verfahren zum Bestimmen einer Torsion eines Rotorblattes wobei
- eine Torsion des Rotorblatts um eine in dem Rotorblatt in Blattlängsrichtung angeordnete Referenzwelle (12) erfasst wird,
- die Referenzwelle so in dem Rotorblatt gelagert ist, dass das Rotorblatt frei um die Referenzwelle (12) tordieren kann, so dass die Referenzwelle (12) beim Tordieren des Rotorblattes nicht tordiert,
- eine Verdrehung durch wenigstens einen an der Referenzwelle angeordneten Drehsensor (20) zum Erfassen einer Verdrehung des Rotorblattes um die Referenzwelle (12) im Bereich des Drehsensors (20) erfasst wird, und
- mittels des Drehsensors (20) ein die Verdrehung des Rotorblattes relativ zur Referenzwelle (12) beschreibender Drehwinkel oder eine andere korrespondierende Größe ausgegeben wird, und **dadurch gekennzeichnet, dass**
- der Drehwinkel oder die Verdrehung des Rotorblattes an mehreren in Blattlängsrichtung verteilter Positionen erfasst wird, und
- mehrere Drehsensoren zum Erfassen einer Verdrehung des Rotorblattes an mehreren Positionen entlang der Referenzwelle angeordnet sind.

8. Verfahren nach Anspruch 7, **dadurch gekennzeichnet, dass**
ein Messsystem gemäß einem der Ansprüche 1 bis 6 verwendet wird, wobei insbesondere der Drehwinkel und/oder die Verdrehung des Rotorblattes zeitlich kontinuierlich erfasst wird.

9. Rotorblatt einer Windenergieanlage und das Rotorblatt umfasst
- eine Rotorblattwurzel zum Befestigen des Rotorblattes an einer Rotornabe,
- eine an einer zur Rotorblattwurzel abgewandten Seite des Rotorblattes angeordnete Rotorblattspitze,
- eine in dem Rotorblatt in Blattlängsrichtung angeordnete Referenzwelle (12),
- wenigstens eine Lagerung der Referenzwelle (12), zum freien Lagern der Referenzwelle (12) in dem Rotorblatt, so dass das Rotorblatt frei um die Referenzwelle (12) tordieren kann, so dass die Referenzwelle (12) beim Tordieren des Rotorblattes nicht tordiert, und
- wenigstens einen an der Referenzwelle angeordneten Drehsensor (20) zum Erfassen einer Verdrehung des Rotorblattes um die Referenzwelle (12) im Bereich des Drehsensors (20), wobei der Drehsensor (20) einen die Verdrehung des Rotorblattes relativ zur Referenzwelle (12) beschreibenden Drehwinkel oder eine andere korrespondierende Größe ausgibt, **dadurch gekennzeichnet, dass**
- die Referenzwelle (12) als Hohlwelle ausgebildet ist, und
- mehrere Drehsensoren zum Erfassen einer Verdrehung des Rotorblattes an mehreren Positionen entlang der Referenzwelle angeordnet sind.

10. Rotorblatt nach Anspruch 9, **dadurch gekennzeichnet, dass**
ein von der Rotorblattwurzel in Richtung zur Rotorblattspitze verlaufender Vorderkantensteg (13) vorgesehen ist, und an dem Vorderkantensteg (13) die Referenzwelle (12) und wenigstens ein Abschnitt des Drehsensors angeordnet sind.

11. Rotorblatt nach Anspruch 9 oder 10, **dadurch gekennzeichnet, dass**
ein Messsystem (10) nach einem der Ansprüche 1 bis 6 verwendet wird und die Referenzwelle (12), die wenigstens eine Lagerung der Referenzwelle (12) und der wenigstens eine Drehsensor (20) Elemente dieses Messsystems sind.

12. Rotorblatt nach Anspruch 11, **dadurch gekennzeichnet, dass**
das Rotorblatt in seiner Blattspitze eine Wellenaufnahme (18) zum drehfesten Lagern der Referenzwelle (12) aufweist, und insbesondere die Referenzwelle (12) mit einem Passstück in einem Strukturelement des Rotorblattes, besonders in einer Innenkontur eines bzw. des Vorderkantenstegs (13) drehsteif eingeklemmt ist, oder
das Rotorblatt in seiner Blattwurzel eine Wellenaufnahme (18) zum drehfesten Lagern der Referenzwelle (12) aufweist.

13. Verfahren zum Montieren eines Messsystems (10) nach einem der Ansprüche 1 bis 6 in einem Rotorblatt einer Windenergieanlage, umfassend die Schritte
- drehsteifes Befestigen eines Passstücks auf einem Blattspitzenabschnitt der Referenzwelle (12),
- Einschieben der Referenzwelle (12) mit dem Passstück voran in einen Einbauraum in der Blattspitze des Rotorblattes, entlang eines Strukturelementes, besonders eines Vorderkantenstegs (13),
- Aufschieben der Lagerungsmittel (22) auf die Referenzwelle (12) und Befestigen der Lagerungsmittel (22) entlang des Strukturelementes bzw. des Vorderkantenstegs (13),
- Anordnen des wenigstens einen Drehsensors (20) im Bereich der Referenzwelle (12) in dem Rotorblatt, wobei insbesondere
- einige der Lagerungsmittel in einem nicht begehbaren Bereich in der Nähe der Blattspitze durch Festklemmen an dem Strukturelement bzw. in dem Vorderkantensteg befestigt werden und
- einige andere der Lagerungsmittel in einem begehbaren Bereich an dem Strukturelement bzw. dem Vorderkantensteg verklebt werden.

14. Verfahren zum Warten oder Reparieren eines in einem Rotorblatt angeordneten Messsystems zum Bestimmen einer Torsion des Rotorblattes, und das Messsystem umfasst
- eine in dem Rotorblatt in Blattlängsrichtung angeordnete Referenzwelle (12),
- wenigstens eine Lagerung der Referenzwelle (12), zum freien Lagern der Referenzwelle (12) in dem Rotorblatt, so dass das Rotorblatt frei um die Referenzwelle (12) tordieren kann, so dass die Referenzwelle (12) beim Tordieren des Rotorblattes nicht tordiert, und
- wenigstens einen an der Referenzwelle angeordneten Drehsensor (20) zum Erfassen einer Verdrehung des Rotorblattes um die Referenzwelle (12) im Bereich des Drehsensors (20), wobei der Drehsensor (20) einen die Verdrehung des Rotorblattes relativ zur Referenzwelle (12) beschreibenden Drehwinkel oder eine andere korrespondierende Größe ausgibt, umfassend die Schritte:
- Entnehmen der Referenzwelle oder eines Teils davon aus wenigstens einer der Lagerungen,
- Ausbauen dieser wenigstens einen Lagerung und/oder des wenigstens einen Drehsensors,
- Überprüfen der ausgebauten Lagerung bzw. des ausgebauten Drehsensors und
- Wiedereinsetzen der Lagerung bzw. des Drehsensors, oder eines entsprechenden Ersatzteils,
- Wiedereinsetzen der Referenzwelle bzw. des entnommenen Teils davon, wobei als Messsystem ein Messsystem nach einem der Ansprüche 1 bis 6 verwendet wird.

15. Windenergieanlage umfassend wenigstens ein Rotorblatt nach einem der Ansprüche 9 bis 12 und außerdem oder alternativ einem Messsystem (10) nach einem der Ansprüche 1 bis 6.

## Claims

1. A measuring system (10) for determining a torsion of a rotor blade, comprising
- a reference shaft (12) to be arranged in the rotor blade in the longitudinal direction of the blade,
- at least one support for the reference shaft (12), for freely bearing the reference shaft (12) in the rotor blade, so that the rotor blade can twist freely about the reference shaft (12), so that the reference shaft (12) does not twist when there is twisting of the rotor blade,
- at least one rotary sensor (20), arranged on the reference shaft, for detecting a twisting of the rotor blade about the reference shaft (12) in the region of the rotary sensor (20), the rotary sensor (20) outputting a rotational angle describing the twisting of the rotor blade in relation to the rotor shaft (12), or some other corresponding variable, **characterized in that**
- the reference shaft (12) is formed as a hollow shaft, and
- a number of rotary sensors for detecting a twisting of the rotor blade are arranged at a number of positions along the reference shaft.

2. The measuring system (10) as claimed in claim 1
**characterized in that**
supporting means (22) are provided in orderto arrange the reference shaft (12) along a leading edge web (13) of the rotor blade, and/or the supporting means (22) are prepared for being adhesively attached or clamped on the leading edge web (13).

3. The measuring system (10) as claimed in claim 1 or 2,
**characterized in that**
a rotationally fixed shaft seat (18) is provided in order to fasten one end of the reference shaft (12) in a rotationally fixed manner in the region of a rotor blade tip, and/or the reference shaft (12) is arranged in an axially displaceable manner.

4. The measuring system (10) as claimed in one of the preceding claims,
**characterized in that**
the reference shaft (12) is electrically non conductive and/or is produced from a composite fiber material, particularly from plastic reinforced with aramid fibers or carbon fibers, wherein the reference shaft (12) is made up of a number of shaft segments.

5. The measuring system (10) as claimed in one of the preceding claims,
**characterized in that**
the rotary sensor (20) is formed as an optical rotary sensor and/or has a marker element, which is prepared for fastening on the reference shaft, and a pickup, which is prepared for fastening on the leading edge web (13) of the rotor blade or some other structural element of the rotor blade, the pickup being prepared for detecting a twisting of the marker element in relation to the pickup in order in this way to detect a twisting of the rotor blade in relation to the reference shaft at this location.

6. The measuring system (10) as claimed in one of the preceding claims,
**characterized in that**
the reference shaft (12) is supported on the number of rotary sensors (20) along the longitudinal direction of the blade.

7. A method for determining a torsion of a rotor blade, wherein
- a torsion of the rotor blade about a reference shaft (12) arranged in the rotor blade in the longitudinal direction of the blade is detected,
- the reference shaft is supported in the rotor blade in such a way that the rotor blade can twist freely about the reference shaft (12), so that the reference shaft (12) does not twist when there is twisting of the rotor blade,
- a twisting is detected by at least one rotary sensor (20) arranged on the reference shaft for detecting a twisting of the rotor blade about the reference shaft (12) in the region of the rotary sensor (20), and
- a rotary angle describing the twisting of the rotor blade in relation to the reference shaft (12), or some other corresponding variable, is output by means of the rotary sensor (20), and **characterized in that**
- the rotational angle or the twisting of the rotor blade is detected at a number of positions distributed in the longitudinal direction of the blade, and
- a number of rotary sensors for detecting a twisting of the rotor blade are arranged at a number of positions along the reference shaft.

8. The method as claimed in claim 7,
**characterized in that**
a measuring system according to one of claims 1 to 6 is used wherein in particular the rotational angle and/or the twisting of the rotor blade is detected continuously over time.

9. A rotor blade of a wind power installation and the rotor blade comprises
- a rotor blade root for fastening the rotor blade on a rotor hub,
- a rotor blade tip arranged on a side of the rotor blade that is facing away from the rotor blade root,
- a reference shaft (12) arranged in the rotor blade in the longitudinal direction of the blade,
- at least one support for the reference shaft (12), for freely bearing the reference shaft (12) in the rotor blade, so that the rotor blade can twist freely about the reference shaft (12), so that the reference shaft (12) does not twist when there is twisting of the rotor blade, and
- at least one rotary sensor (20) arranged on the reference shaft for detecting a twisting of the rotor blade about the reference shaft (12) in the region of the rotary sensor (20), the rotary sensor (20) outputting a rotational angle describing the twisting of the rotor blade in relation to the reference shaft (12), or some other corresponding variable **characterized in that**
- the reference shaft (12) is formed as a hollow shaft, and
- a number of rotary sensors for detecting a twisting of the rotor blade are arranged at a number of positions along the reference shaft.

10. The rotor blade as claimed in claim 9,
**characterized in that**
a leading edge web (13) running from the rotor blade root in the direction of the rotor blade tip is provided, and the reference shaft (12) and at least one portion of the rotary sensor are arranged on the leading edge web (13).

11. The rotor blade as claimed in claim 9 or 10,
**characterized in that**
a measuring system (10) as claimed in one of claims 1 to 6 is used and the reference shaft (12), the at least one support for the reference shaft (12) and the at least one rotary sensor (20) are elements of this measuring system.

12. The rotor blade as claimed in claim 11,
**characterized in that**
the rotor blade has in its blade tip a shaft seat (18) for bearing the reference shaft (12) in a rotationally fixed manner, and in particular the reference shaft (12) is clamped in a structural element of the rotor blade, particularly in an inner contour of a or the leading edge web (13), in a rotationally rigid manner by means of a fitting piece, or
the rotor blade has in its blade root a shaft seat (18) for bearing the reference shaft (12) in a rotationally fixed manner.

13. A method for mounting a measuring system (10) as claimed in one of claims 1 to 6 in a rotor blade of a wind power installation, comprising the steps of
- fastening a fitting piece in a rotationally rigid manner on a blade tip portion of the reference shaft (12),
- pushing the reference shaft (12) with the fitting piece out in front into an installation space in the blade tip of the rotor blade, along a structural element, particularly a leading edge web (13),
- pushing the supporting means (22) onto the reference shaft (12) and fastening the supporting means (22) along the structural element or the leading edge web (13),
- arranging the at least one rotary sensor (20) in the region of the reference shaft (12) in the rotor blade, wherein in particular
- some of the supporting means are fastened in a region that cannot be reached by a person in the vicinity of the blade tip by securely clamping on the structural element or in the leading edge web and
- some other of the supporting means are adhesively attached in a region that can be reached by a person on the structural element or the leading edge web.

14. A method for maintaining or repairing a measuring system arranged in a rotor blade for determining a torsion of the rotor blade, and the measuring system comprises
- a reference shaft (12), arranged in the rotor blade in the longitudinal direction of the blade,
- at least one support for the reference shaft (12), for freely bearing the reference shaft (12) in the rotor blade, so that the rotor blade can twist freely about the reference shaft (12), so that the reference shaft (12) does not twist when there is twisting of the rotor blade, and
- at least one rotary sensor (20), arranged on the reference shaft, for detecting a twisting of the rotor blade about the reference shaft (12) in the region of the rotary sensor (20), the rotary sensor (20) outputting a rotational angle describing the twisting of the rotor blade in relation to the rotor shaft (12), or some other corresponding variable, comprising the steps of:
- removing the reference shaft or part of it from at least one of the supports,
- taking out this at least one support and/or the at least one rotary sensor,
- inspecting the support taken out or the rotary sensor taken out and
- refitting the support or the rotary sensor, or a corresponding replacement part,
- refitting the reference shaft or the part of it that was removed, wherein a measuring system as claimed in one of claims 1 to 6 is used as the measuring system.

15. A wind power installation comprising at least one rotor blade as claimed in one of claims 9 to 12 and also or alternatively a measuring system (10) as claimed in one of claims 1 to 6.

## Revendications

1. Système de mesure (10) destiné à définir une torsion d'une pale de rotor, comprenant
- un arbre de référence (12) à disposer dans la pale de rotor dans la direction longitudinale de pale,
- au moins un support de l'arbre de référence (12) destiné à monter librement l'arbre de référence (12) dans la plage de rotor de telle sorte que la pale de rotor peut effectuer librement une torsion autour de l'arbre de référence (12) de telle sorte que l'arbre de référence (12) n'effectue aucune torsion lors de la torsion de la pale de rotor,
- au moins un capteur de rotation (20) disposé sur l'arbre de référence destiné à détecter une torsion de la pale de rotor autour de l'arbre de référence (12) dans la zone du capteur de rotation (20), dans lequel le capteur de rotation (20) fournit un angle de rotation décrivant la torsion de la pale de rotor par rapport à l'arbre de référence (12) ou une autre grandeur correspondante, **caractérisé en ce que**
- l'arbre de référence (12) est réalisé en tant qu'arbre creux, et
- plusieurs capteurs de rotation sont disposés sur plusieurs positions le long de l'arbre de référence pour détecter une torsion de la pale de rotor.

2. Système de mesure (10) selon la revendication 1, **caractérisé en ce que**
sont prévus des moyens de support (22) pour disposer l'arbre de référence (12) le long d'une entretoise de bord d'attaque (13) de la pale de rotor et/ou les moyens de support (22) sont préparés pour être collés ou serrés sur l'entretoise de bord d'attaque (13).

3. Système de mesure (10) selon la revendication 1 ou 2, **caractérisé en ce que**
un logement d'arbre (18) solidaire en rotation est prévu pour fixer de manière solidaire en rotation une extrémité de l'arbre de référence (12) dans la zone d'une pointe de pale de rotor et/ou l'arbre de référence (12) est disposé de manière à pouvoir coulisser axialement.

4. Système de mesure (10) selon l'une quelconque des revendications précédentes, **caractérisé en ce que**
l'arbre de référence (12) est produit de manière non conductrice électriquement et/ou à partir d'un matériau composite à base de fibres, en particulier à partir d'une matière plastique renforcée avec des fibres d'aramide ou des fibres de carbone, dans lequel l'arbre de référence (12) se compose en particulier de plusieurs segments d'arbre.

5. Système de mesure (10) selon l'une quelconque des revendications précédentes, **caractérisé en ce que**
le capteur de rotation (20) est réalisé en tant que capteur de rotation optique et/ou présente un élément de marquage, qui est préparé pour être fixé sur l'arbre de référence, et
un système d'enregistrement, qui est préparé pour être fixé sur l'entretoise de bord d'attaque (13) de la pale de rotor ou d'un autre élément structurel de la pale de rotor, et dans lequel le système d'enregistrement est préparé pour détecter une torsion de l'élément de marquage par rapport au système d'enregistrement pour détecter ainsi une torsion de la pale de rotor par rapport à l'arbre de référence sur cet emplacement.

6. Système de mesure (10) selon l'une quelconque des revendications précédentes, **caractérisé en ce que**
l'arbre de référence (12) est monté sur les plusieurs capteurs de rotation (20) le long de la direction longitudinale de pale.

7. Procédé de définition d'une torsion d'une pale de rotor, dans lequel
- une torsion de la pale de rotor est détectée autour d'un arbre de référence (12) disposé dans la pale de rotor dans la direction longitudinale de pale,
- l'arbre de référence est monté de telle sorte dans la pale de rotor que la pale de rotor peut effectuer une torsion librement autour de l'arbre de référence (12) de telle sorte que l'arbre de référence (12) n'effectue aucune torsion lors de la torsion de la pale de rotor,
- une torsion est détectée par au moins un capteur de rotation (20) disposé sur l'arbre de référence destiné à détecter une torsion de la pale de rotor autour de l'arbre de référence (12) dans la zone du capteur de rotation (20), et
- un angle de rotation décrivant la torsion de la pale de rotor par rapport à l'arbre de référence (12) ou une autre grandeur correspondante est fourni(e) au moyen du capteur de rotation (20), et **caractérisé en ce que**
- l'angle de rotation ou la torsion de la pale de rotor est détecté(e) sur plusieurs positions réparties dans la direction longitudinale de pale, et
- plusieurs capteurs de rotation sont disposés le long de l'arbre de référence pour détecter une torsion de la pale de rotor sur plusieurs positions.

8. Procédé selon la revendication 7, **caractérisé en ce que**
un système de mesure selon l'une quelconque des revendications 1 à 6 est utilisé, dans lequel en particulier l'angle de rotation et/ou la torsion de la pale de rotor sont détectés en continu dans le temps.

9. Pale de rotor d'une éolienne, laquelle pale de rotor comprend
- une racine de pale de rotor destinée à fixer la pale de rotor sur un moyeu de rotor,
- une pointe de pale de rotor disposée sur un côté, opposé par rapport à la racine de pale de rotor, de la pale de rotor,
- un arbre de référence (12) disposé dans la pale de rotor dans la direction longitudinale de pale,
- au moins un support de l'arbre de référence (12) destiné à monter librement l'arbre de référence (12) dans la pale de rotor de telle sorte que la pale de rotor peut effectuer une torsion librement autour de l'arbre de référence (12) de telle sorte que l'arbre de référence (12) n'effectue aucune torsion lors de la torsion de la pale de rotor, et
- au moins un capteur de rotation (20) disposé sur l'arbre de référence, destiné à détecter une torsion de la pale de rotor autour de l'arbre de référence (12) dans la zone du capteur de rotation (20), dans lequel le capteur de rotation (20) fournit un angle de rotation décrivant la torsion de la pale de rotor par rapport à l'arbre de référence (12) ou une autre grandeur correspondante, **caractérisé en ce que**
- l'arbre de référence (12) est réalisé en tant qu'arbre creux, et
- plusieurs capteurs de rotation sont disposés le long de l'arbre de référence pour détecter une torsion de la pale de rotor sur plusieurs positions.

10. Pale de rotor selon la revendication 9, **caractérisée en ce que**
une entretoise de bord d'attaque (13) s'étendant depuis la racine de pale de rotor en direction de la pointe de pale de rotor est prévue, et l'arbre de référence (12) et au moins une section du capteur de rotation sont disposés sur l'entretoise de bord d'attaque (13).

11. Pale de rotor selon la revendication 9 ou 10, **caractérisé en ce que**
un système de mesure (10) selon l'une quelconque des revendications 1 à 6 est utilisé et l'arbre de référence (12), l'au moins un support de l'arbre de référence (12) et l'au moins un capteur de rotation (20) sont des éléments dudit système de mesure.

12. Pale de rotor selon la revendication 11, **caractérisé en ce que**
la pale de rotor présente dans sa pointe de pale un logement d'arbre (18) destiné à monter de manière solidaire en rotation l'arbre de référence (12), et en particulier l'arbre de référence (12) est coincé de manière rigide en rotation avec un adaptateur dans un élément structurel de la pale de rotor, en particulier dans un contour intérieur d'une ou de l'entretoise de bord d'attaque (13), ou
la pale de rotor présente dans sa racine de pale un logement d'arbre (18) destiné à monter de manière solidaire en rotation l'arbre de référence (12).

13. Procédé de montage d'un système de mesure (10) selon l'une quelconque des revendications 1 à 6 dans une pale de rotor d'une éolienne, comprenant les étapes
- de fixation de manière rigide en rotation d'un adaptateur sur une section de pointe de pale de l'arbre de référence (12),
- d'insertion par glissement de l'arbre de référence (12) avec l'adaptateur dans un espace d'encastrement dans la pointe de pale de la pale de rotor le long d'un élément structurel, en particulier d'une entretoise de bord d'attaque (13),
- d'enfilement des moyens de support (22) sur l'arbre de référence (12) et de fixation des moyens de support (22) le long de l'élément structurel ou de l'entretoise de bord d'attaque (13),
- de disposition de l'au moins un capteur de rotation (20) dans la zone de l'arbre de référence (12) dans la pale de rotor, dans lequel en particulier
- certains des moyens de support sont fixés dans une zone non praticable à proximité de la pointe de pale par immobilisation par serrage sur l'élément structurel ou dans l'entretoise de bord d'attaque, et
- certains autres des moyens de support sont collés dans une zone praticable sur l'élément structurel ou l'entretoise de bord d'attaque.

14. Procédé d'entretien ou de réparation d'un système de mesure disposé dans la pale de rotor pour définir une torsion de la pale de rotor, lequel système de mesure comprend
- un arbre de référence (12) disposé dans la pale de rotor dans la direction longitudinale de pale,
- au moins un support de l'arbre de référence (12) destiné à monter librement l'arbre de référence (12) dans la pale de rotor de telle sorte que la pale de rotor peut effectuer une torsion librement autour de l'arbre de référence (12) de telle sorte que l'arbre de référence (12) ne peut effectuer aucune torsion lors de la torsion de la pale de rotor, et
- au moins un capteur de rotation (20) disposé sur l'arbre de référence, destiné à détecter une torsion de la pale de rotor autour de l'arbre de référence (12) dans la zone du capteur de rotation (20), dans lequel le capteur de rotation (20) fournit un angle de rotation décrivant la torsion de la pale de rotor par rapport à l'arbre de référence (12) ou une autre grandeur correspondante, comprenant les étapes :
- de retrait de l'arbre de référence ou d'une partie de celui-ci hors d'au moins un des supports,
- d'aménagement dudit au moins un support et/ou de l'au moins un capteur de rotation,
- de vérification du support aménagé ou du capteur de rotation aménagé, et
- de résinsertion du support ou du capteur de rotation, ou d'une pièce détachée correspondante,
- de résinsertion de l'arbre de référence ou de la partie retirée de celui-ci, dans lequel un système de mesure selon l'une quelconque des revendications 1 à 6 est utilisé en tant que système de mesure.

15. Eolienne comprenant au moins une pale de rotor selon l'une quelconque des revendications 9 à 12 et par ailleurs ou en variante un système de mesure (10) selon l'une quelconque des revendications 1 à 6.
